# EUROPEAN PATENT APPLICATION

(11) **EP 2 209 283 A1**
(43) Date of publication of application: **21.07.2010**
(21) Application number: 09150955.4
(22) Date of filing: 20.01.2009
(51) Int. Cl.: H04L 29/06

(54) **Node failure detection system and method for SIP sessions in communication networks.**

(71) Applicant: Vodafone Group PLC, Newbury Berkshire RG14 2FN (GB)
(72) Inventor: Farrugia, Maria, Guildford, Surrey GU1 2EG (GB); Stura, Marco, 10010, Rueglio (TO) (IT); Monti, Maurizio, 20090, Settala (MI) (IT)
(74) Representative: Acco, Stefania

(57) **Abstract**

The present invention relates to a failure detection method and system operating at the session control layer, preferably within an IMS/SIP architecture, which monitors the status of an adjacent node with the aid of a timer mechanism that sets a heartbeat rate associated with that adjacent node. Monitoring of a communication session takes place by monitoring the liveliness of the nodes handling the session.

According to some embodiments, SIP traffic within an on-going communication session is used to determine whether an adjacent node is alive. Failure to receive a SIP message from an adjacent node within a given heartbeat rate starts a polling process to decide whether the adjacent node is in a faulty status. In the affirmative, *i*.*e*. upon decision that the adjacent node is in a faulty status, the polling node closes the communication session so that any further billing is prevented.

According to some other embodiments, when a transport connection has been established between two adjacent SIP nodes, the node that has initiated the connection starts a polling process for monitoring the liveliness of the adjacent node. The polling process comprises the step of sending a first polling message requesting the adjacent node to initialise a timer with a heartbeat rate proposed by the initiating node or agreed between the two nodes. Initialisation of the timer triggers in the adjacent node the response to the polling message. Failure to receive an acknowledgement message from an adjacent node within a given heartbeat rate determines one or more actions in the initiating node aimed at the decision of a faulty status of the adjacent node. Upon decision that the adjacent node is in a faulty status, the initiating node closes the communication session so that any further billing is prevented.

## Description

The present invention generally relates to a system and method for managing detection of failure of a network node handling a communication session supported over an IP (Internet Protocol) session-control layer and, in particular, over an IP multimedia subsystem (IMS) infrastructure.

Recently, the IP-based network architecture referred to as IP multimedia subsystem (IMS) has been developed with the aim of allowing service providers to deliver access-agnostic services, namely independent of the type of network domain on which they are being run, the network domain being a packet-switched (e.g., IP) network, a circuit-switched (CS) cellular or a fixed-line network. The IMS can be seen as a horizontal session-control layer that acts as a signalling middle layer between the network accessing the services and the service (application) layer.

Current 3^{rd} Generation Partnership Project (3GPP) has chosen Session Initiation Protocol (SIP) to be the signalling protocol in IMS. A user terminal can connect to an IMS in various ways, all of which use standard IP. IMS provides the functionalities for the routing of SIP messages, enabling them to be routed to the correct application servers. Several types of entities are involved in establishing sessions between SIP user equipments (UEs), typically a calling party and a called party.

Within the IMS/SIP architecture, SIP entities are collectively referred to as Call Section Control Function (CSCF) and include at least one of three kinds of functions: Proxy-CSCF (P-CSCF), Serving-CSCF (S-CSCF), and Interrogating-CSCF (I-CSCF). According to SIP signalling process, to initiate a session, the caller (first UE) sends a request, which is first handled by a P-CSCF, which interprets, and, if necessary, rewrites a request message before forwarding the request to another server, i.e., a S-CSCF or I-CSCF, which can service the request internally or pass it on, possibly after translation to other servers. As a result, a subscriber's session is generally handled by a plurality of entities along the end-to-end transmission path between two UEs.

Since SIP is based on the request-response paradigm, failure of an entity, such as a network node, during a subscriber's session, may result in the hanging of the session on one side of the communication. Consequently, capacity and performance of the active entities handling the communication session can be negatively affected, as sessions states are kept in vain.

SIP entities generate charging information for real-time billing while a service is running. Having hanging sessions in some of the entities may result in over-billing the user, as a longer session time is accounted than what has been actually used.

In general, SIP does not define a keep-alive mechanism for the sessions. The Network Working Group document RFC 4028 entitled "*Session Timers in the Session Initiation Protocol (SIP)*", downloaded from the Internet on December 15, 2008 at http://www.ietf.org/rfc/rfc4028.txt, specifies an extension to SIP. This extension provides a method by which SIP entities send a periodic refresh through a re-INVITE or UPDATE request. Within a Session-Expires definition, SIP entities agree on an interval in which they will re-confirm the existence of a session, while within a Min-SE definition, entities agree on a configured minimum value for the session interval that they are willing to accept.

The patent abstract of JP patent application No. 2004-179764 discloses a fault detection system in a SIP network, in which when no acknowledgement signal to an INVITE message is returned to a SIP server, that server detects a fault in the call control function of the SIP server to which the INVITE message was sent.

The Applicant has observed that, in order to reduce the risk of overcharging the users, the time intervals for the periodic refresh defined by RFC 4028 should be set at a relatively low value, e.g., 90 seconds. However, the signalling generated by the refresh with such a relatively low time interval would have a significant impact on the capacity and performance of the network IP nodes, with an overload that can be as high as 20-25%. On the other hand, if keep-alive messages were sent with a larger interval, e.g., not larger than 30 minutes, as recommended by the standards, the issue of overcharging would not be solved.

The Applicant has noted that a SIP invitation typically includes an end-to-end message, i.e., an INVITE, used to establish a session and an associated SIP dialog, and that the use of an INVITE message between IMS/SIP network nodes as keep-alive message would require a substantial modification of the semantic of the "standard" message. Furthermore, in such a mechanism, it would generally be necessary to repeat the sending of an INVITE message a plurality of times, and then, when a positive acknowledge (ACK) is not received, the connection would be judged to be in a fault condition. This mechanism might reduce the signal overhead, but it may however not solve the problem of over-charging since the time elapsed between the first "keep-alive" INVITE and the judgement of a fault condition by the missing ACK messages can be relatively long, when compared to the duration of sessions, e.g., calls, which can be of some minutes.

The present invention tackles the problem of failure management of communication sessions due to failure of a network node handling the session, while preventing or minimising overcharging due to hanging of a session and while reducing the impact on the capacity and performance of active nodes.

The Applicant has understood that the above problem is solved by the provision of a failure detection mechanism operating at the session control layer, which monitors the status of an adjacent node with the aid of a timer mechanism that sets a heartbeat rate associated with that adjacent node.

In particular, if monitoring of a communication session takes place by monitoring the liveliness of the adjacent nodes handling the session, capacity and performance of IP nodes is not detrimentally affected. Therefore, the heartbeat rate can be selected to be low, e.g., as low as 30 seconds, thereby allowing a minimal impact on overcharging.

According to some embodiments, SIP traffic within an on-going communication session is used to determine whether an adjacent node is alive. Failure to receive a SIP message from an adjacent node within a predetermined heartbeat rate starts a polling process to decide whether the adjacent node is in a faulty status. In the affirmative, *i.e.* upon decision that the adjacent node is in a faulty status, the polling node closes the communication session so that any further billing is prevented.

According to an aspect, the present invention is directed to a method as claimed in claim 1.

According to another aspect, the present invention is directed to a communication system as claimed in claim 12.

According to still another aspect, the present invention is directed to a computer program product according to claim 17.

According to some other embodiments, when a transport connection has been established between two adjacent SIP nodes, the node that has initiated the connection starts a polling process for monitoring the liveliness of the adjacent node. The polling process comprises the step of sending a first polling message requesting the adjacent node to start a timer with a heartbeat rate proposed by the initiator node or agreed between the two nodes. Initialisation of the timer triggers in the adjacent node the response to the polling message. Polling messages are sent at the heartbeat rate. Failure to receive an acknowledgement message from the adjacent node within the heartbeat rate determines one or more actions in the initiator node aimed at the decision of a faulty status of the adjacent node. Upon decision that the adjacent node is in a faulty status, the initiator node closes the communication session so that any further billing is prevented.

In some preferred embodiments of the present invention, a polling mechanism implemented by a node for monitoring the liveliness of an adjacent node employs SIP INFO or SIP OPTION messages as polling messages.

The present invention will now be described more fully hereinafter with reference to the accompanying drawings, in which some, but not all embodiments of the invention are shown.

FIG. 1 schematically illustrates an overview of an IMS/SIP architecture.

FIG. 2 is a schematic diagram representing a scenario of a transmission process of SIP messages in a session-control layer, where it is assumed that a SIP node is in a faulty status.

FIG. 3 is a schematic diagram representing a scenario of a monitoring process of status of the nodes in a session-control layer, according to an embodiment of the present invention.

FIG. 4 is a flow diagram representing a possible signalling within a monitoring process of the type described with reference to Fig. 3.

FIG. 5 is a diagram illustrating a signalling scenario involving the same entities as those of the example reported in Fig. 3.

FIG. 6 illustrates the example of the transmission process of Fig. 2 for which a list for monitoring activity of the adjacent nodes is maintained by each node, according to an embodiment of the present invention.

FIG. 7 is a diagram illustrating a further signalling scenario involving the same entities as those of the example reported in Fig. 3.

FIG. 8 is a flow chart schematically depicting the signalling process for detecting node failure, according to a further embodiment of the invention.

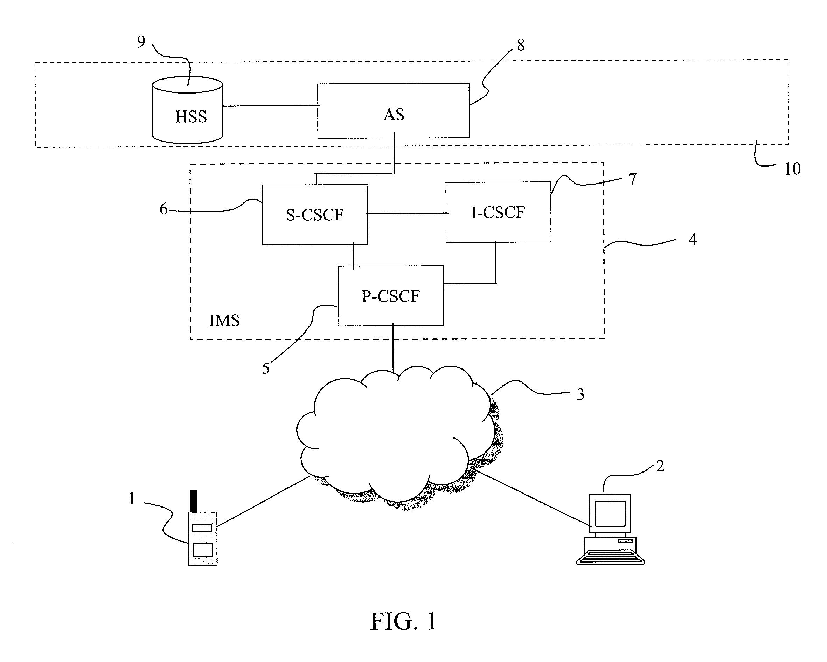

A schematic overview of an IMS/SIP architecture is illustrated in Fig. 1, in which for the purposes of the present discussion only some of the functions are shown.

User equipments (UEs) 1 and 2 are attached to an access network 3, which can be a packet-switched (PS) network or a circuit-switched (CS) network. The access network 3 is linked to an IMS 4, which acts as session control layer situated at the application layer of the TCP/IP model. The session-control layer has SIP as signalling protocol between the UEs and the application servers 8 on a service/application layer 10. In a SIP session, a user initiates the call which prompts the UE (in particular the UA included in the UE, if the UE is an IP-aware terminal) to transmit a SIP message. The message contains the URI (Uniform Resource Identifier) comprising a user identification and the SIP resource, which can be an IP address or a domain name of the calling party. The most common request message for setting up a call is an invitation message, i.e., an INVITE request, which in general contains the request URI of the called party.

Within this description and claims, SIP messages are generally written with capital letters.

User equipments can be a GSM or GPRS mobile terminal or a PC client. The UE registers on the IMS by contacting a P-CSCF 5, which acts as a proxy and forwards the message to the other SIP functions, i.e., I-CSCF and/or S-CSCF.

Within the present description, SIP functions that can handle a SIP message along its transmission path are being referred to as SIP nodes. The message route comprising at least a portion of the transmission path of a SIP message from its originating address, e.g., the calling party, to its destination address, e.g., the called party, is being referred to as the (message) signalling path, which is generally a multi-hop path.

Communications sessions may include Internet telephone calls, conferences or other multimedia activities between two or more than two parties.

The P-CSCF, I-CSCF and S-CSCF comprise standard and known session control functions typically defined in IMS run with SIP. In particular, the S-CSCF 6 is a SIP server that acts as the central point of the session-control layer 4 and interfaces with the application servers (AS) 8 on the service/application layer 10 using SIP. Application servers 8 host and execute services, which can for instance comprise voice mail, call forwarding, call waiting, call holding, push-to-talk, call transfer, call blocking services, conference call services, 3-way calling, location based services, identity presentation/restriction. Application servers are linked to a home subscriber server (HSS) 9, which is a database containing IMS subscriber-related information, including identification, authorized services, subscribed services and can provide information about the user's physical location. The S-CSCF communicates with the HSS to access user profiles among other information.

Once an S-CSCF is assigned to the UE requesting the service, the request message will typically traverse multiple hops, i.e., a plurality of SIP nodes, before arriving at the intended addressee's UE, not shown in the figure. This characteristic of the SIP operation mechanism often imposes significant processing overheads on all of the nodes involved.

When along an established signalling path a node fails, sessions states may kept in vain in the operative (alive) nodes along the signalling path and thus capacity and performance of the signalling network can be negatively affected.

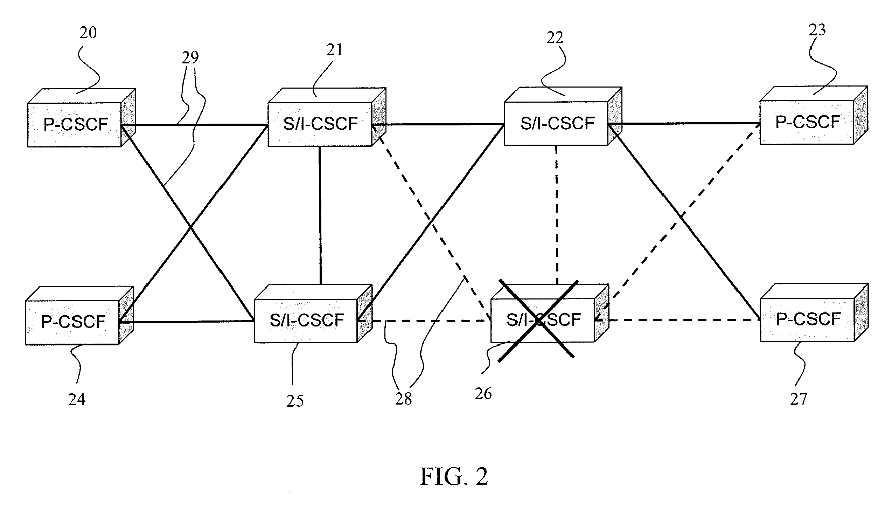

Figure 2 is a diagram illustrating an example of transmission of SIP messages in a session-control layer (or signalling plane) within an IMS/SIP architecture. For example, a SIP request is sent to P-CSCF 20 by a UE (e.g., a GPRS/GSM user terminal, not shown in the figure). The SIP protocol, which is designed to be independent of the underlying transport layer, can run over any so-called reliable (or connection oriented), such as TCP (Transport Control Protocol) or SCTP (Stream Control Transmission Protocol), or unreliable message or stream transport, such as UDP (User Datagram Protocol).

In the preferred embodiments, the transport layer connection is based on TCP or SCTP transport protocols, since they support transport link failure detection and an interruption in the transport-layer connection will automatically result in the tear-down of the communication session.

The Applicant has noted that the use of a reliable transport protocol does not allow detection of failures at the application layer, such as in the case when the process of handling transactions at the session-control layer fails, for instance when the session hangs in one or more nodes along the signalling path, while the transport layer connection is still open.

The SIP request received by P-CSCF 20 is passed through multiple SIP nodes, i.e., S-CSCF or I-CSCF, involved in the signalling transmission before it reaches the destination UE (i.e., the called party, not shown in the figure) associated to the SIP proxy P-CSCF 23 or 27. In particular, the P-CSCF 20 forwards the request to a neighbour SIP node, i.e., S/I-CSCF (the terminology means that it can comprise an S-CSCF or an I-CSCF) 21 or 25. The signalling link, which is the portion of the signalling path overlaying the transport-layer link between adjacent nodes, is represented in the figure by lines 29.

Each node can receive multiple SIP requests and forward multiple responses. In the example of Fig. 2, a second P-CSCF 24 can receive a further SIP request that opens a persistent transport layer connection and is passed on other nodes before reaching the proxies P-CSCF 23 or 27.

In the scenario illustrated in Fig. 2, it is assumed that a node 26 along the signalling path of a SIP message is in a faulty condition, for example it has failed in the middle of a transaction during the communication session. If nodes 21, 22, 23, 25 and 27 adjacent to node 26 transmit requests to the faulty node, no response will be generated and in general no further handling of the request will be possible (dashed lines 28 indicate the non-working signalling links in the signalling path). As a consequence, the session will hang on the side of node 26 and prolongation of charging of the users utilising the session may not be prevented.

In some embodiments of the present invention, SIP traffic within an on-going communication session is used to determine whether an adjacent node is alive. Failure to receive a SIP message from an adjacent node within a predetermined time interval set by a timer initiates a polling process for challenging the status of the adjacent node.

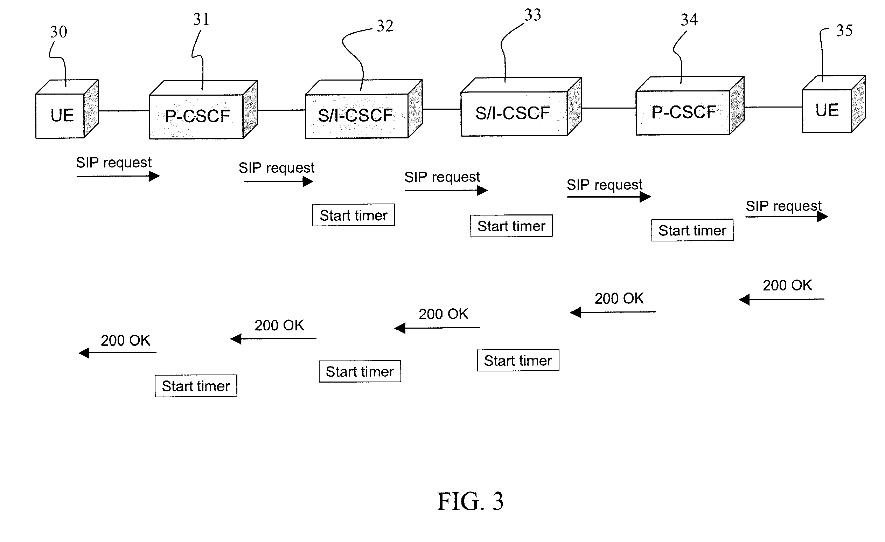

Figure 3 is a schematic diagram representing a transmission process of SIP messages in a signalling plane, according to an embodiment of the present invention. A SIP user agent included in an UE 30 (e.g., a cellular phone) sends a request message, such as an INVITE message, via an access network (e.g., a GPRS/GSM network) to a proxy server P-CSCF 31 of an IMS (i.e., the session-control layer) requesting to set up a session (e.g., a two-way call) with a SIP user agent comprised in UE 35, i.e., the called party. According to SIP standard session management procedures, after transmission of a SIP invitation to set up a session originating from UE 30 with destination UE 35 and receipt of an acknowledgement message to the invitation at the originating address (*i.e.* UE 30), transport-layer connections are open between the nodes handling the communication session. Process steps for establishment of the session are not indicated in the figure. During the session, SIP messages are exchanged along the signalling path. For instance, a SIP request, such as a REGISTER message, is processed in the P-CSCF 31, which forwards the request to one or more S-CSCF and/or I-CSCF, represented in the figure with nodes 32 and 33 (the number of "intermediate" nodes is purely exemplary), in order to be routed to a proxy server P-CSCF 34 located at the edge of the session-control layer and assigned to UE 35.

At least one node and preferably each node of the session-control layer is provided with a monitoring module for determining the status of adjacent nodes. The monitoring module is provided with a timer defining a heartbeat rate T associated with an adjacent node with which a transport-layer connection is established. In other words, the timer is associated with the signalling link overlaying the transport-layer connection between the node and an adjacent node.

In an embodiment, monitoring of an adjacent node starts immediately after establishment of the session. Preferably, immediately after the node has received from an adjacent node the acknowledgement message in response to the invitation to set up a session it has sent to the adjacent node, the monitoring module is configured to start the timer associated with the adjacent node. The timer is configured to reset and start (*i.e.* to restart) upon receipt of a SIP message from the adjacent node, if the SIP message is received within the heartbeat rate. Thus, the heartbeat rate defines the time interval within which a SIP message should be received from the adjacent node.

In Fig. 3, which represents the case of all nodes being on service, receipt of the SIP request on a node restarts the timer provided in the node, at each hop of the signalling path from UE 30 to UE 35, and, similarly, receipt of the response (e.g., 200 OK message) to the SIP request starts the timer provided in the nodes along the message route in the opposite direction, i.e., from UE 35 to UE 30. For example, receipt of the SIP request at S/I-CSCF 32 transmitted from P-CSCF 31 starts a timer provided in S/I-CSCF 32 which is associated with the signalling link to the P-CSCF 31. In general, receipt of any SIP message at a node restarts the timer stored in the node and associated with the adjacent node that originates the message. If a node has an open transport-layer connection with more than one adjacent node, a timer is set for each adjacent node.

If, within a first node, the timer associated with an adjacent second node expires without receipt of a SIP message from the second node, a polling process starts wherein the first node polls the second node by sending at least one polling message.

Upon transmission of a first polling message, a polling rate for a response to the first polling message is set in the first (polling) node. In particular, transmission of the polling message initialises a polling timer having as time interval the polling rate. In a preferred embodiment, the polling time is set to be equal to the heartbeat rate. This may simplify managing of the monitoring process since only one timer would need to be associated with the monitored adjacent node.

If, when the polling rate elapses, no response has been received to the polling message from the adjacent node, the polling node takes one or more actions aimed to the decision on whether the adjacent node is in a faulty status. The decision on whether the adjacent node is in a faulty status, which corresponds to the detection of the adjacent node failure and which determines an action to be taken by the polling node as explained in the following, can be based on different approaches.

In an embodiment, faulty status of the adjacent node is decided if a time equal to the polling rate has elapsed and no response to the first polling message has been received from the adjacent node. This implies that the polled adjacent node is judged to be in a faulty status when a time larger than the polling rate has elapsed from the last response received from the adjacent node.

In another embodiment, the polling node decides that the polled adjacent node is in a faulty status when after transmittal of N polling messages, with N>1, transmitted at a time interval equal to the polling rate, the first node receives no acknowledgement message from the polled node to the N^{th}-polling message.

In still another embodiment, expiry of the polling timer without receipt of the response from the node, e.g., after transmission of a first polling message, triggers a guard timer in the polling node with time interval T_{f}, which allows the polling node to wait for an additional time T_{f} (after expiration of the polling rate) before the polling node decides that the adjacent node is in the faulty status. The time interval T_{f} can be configured by the operator.

In general, the faulty status of the adjacent node is decided if a time equal to at least the polling rate has elapsed and no response has been received from the adjacent node.

The decision that the polled adjacent node is in a faulty status determines the action in the polling node of closing the sessions that include/involve the failed node in their signalling path. According to a preferred embodiment, upon detection of failure of the adjacent node, the polling node sends a BYE request along a signalling path in the opposite direction from where the failure was detected, e.g., if the downstream node is faulty, the BYE request is transmitted to the upstream node, so as to terminate the ongoing sessions affected by the failed node. In addition, if necessary, the polling node closes the transport connection with the faulty node.

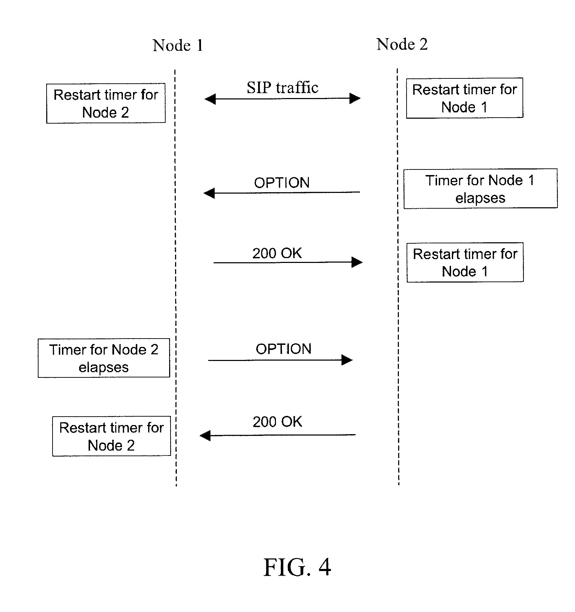

An example of a monitoring process in accordance with the present embodiment between two adjacent nodes, indicated with Node 1 and Node 2, is reported in the flow diagram of Fig. 4. Node 1 and 2 have an open transport-layer two-way connection and an exchange of SIP messages, indicated in the figure with "SIP traffic", takes place between the two nodes. Receipt of a message at a node restarts the timer associated with the other node, as described with reference to Fig. 3. In this embodiment, it is assumed that the timers set in the two nodes have the same heartbeat rate T and that polling rate in both nodes is selected to be equal to the heartbeat rate T. Therefore, Node 1 is provided with a timer associated with Node 2 and Node 2 is provided with a timer (having equal heartbeat rate) associated with Node 1. If, during the session, the timer of Node 2 associated with the signalling link to Node 1 elapses without receipt of a message from Node 1, Node 2 transmits a polling message, such as an OPTION message, to Node 1 and starts the timer associated with Node 1. If within the heartbeat rate set by the timer associated with Node 1, a message, such as a response message 200 OK to the OPTION, is received by Node 2, Node 1 is judged to be on service status, the timer associated with Node 1 is restarted and Node 2 is placed again in a waiting condition for receipt of SIP traffic from Node 1.

Figure 4 illustrates also the example that in Node 1 the time set by the timer associated with Node 2 expires without receipt of a message from Node 2. Analogously to what described above, when the timer in Node 1 elapses, Node 1 sends a polling message to Node 2, such as an OPTION, and starts the timer. If a message from Node 2 is received within the heartbeat rate, e.g., a 200 OK response to the polling message or any other SIP message, Node 2 is judged to be on service status, the timer associated with Node 2 is restarted and Node 1 is placed again in a waiting condition for receipt of SIP traffic from Node 2.

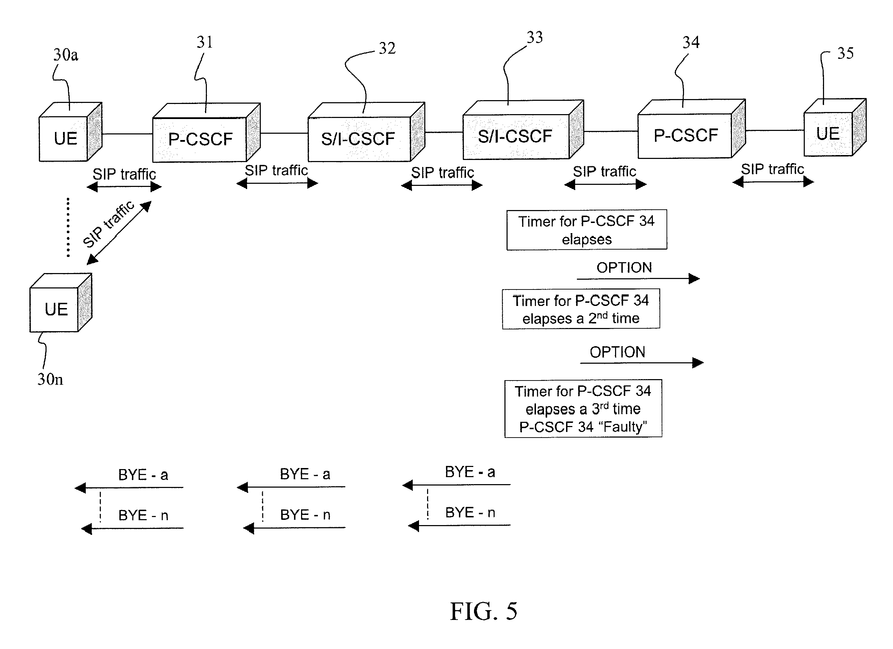

Figure 5 is a diagram illustrating a signalling scenario involving the same entities as those of the example reported in Fig. 3. Same numbers are used to identify like components having the same or similar functions. In the scenario of Fig. 5, the proxy server P-CSCF 31 serves as edge proxy more than one user agent, for example user agent included in user equipment (UE) 30a and user agent included in UE 30n. There may be other parties (not indicated in the figure) joining in the session. This may represent the example of a session being a multi-way conference call. It is assumed that a transport connection, e.g., SCTP, between the network nodes is open. In the condition that all nodes involved in the session between parties UE 30a, UE 30n and UE 35, are alive, message exchange between the nodes takes place, which is generally indicated in the figure as "SIP traffic". As described above, receipt of a SIP message from an adjacent node within a predetermined heartbeat rate restarts the timer associated to that node. In the scenario illustrated in Fig. 5, it is assumed that, during the communication session, the heartbeat rate set by the timer in S/I-CSCF 33 associated with P-CSCF 34 elapses without receipt of a message from the proxy server P-CSCF 34. After the timer expires, S/I-CSCF 33 sends a first polling message, such as an OPTION, to the non-responding node P-CSCF 34. Sending of the first polling message starts the polling timer in S/I-CSCF 33. If the polling timer expires without response from P-CSCF 34, the S/I-CSCF 33 may transmit a second polling message. The node (in particular the monitoring module in the node) may be configured to transmit the polling message N times before deciding, in case no response has been received within the time set by the polling timer after transmission of the N-th polling message that the node P-CSCF 34 is in a faulty status. In the example reported in Fig. 5, after the transmission of the second polling message, when the timer expires a third time without receipt of a response message by P-CSCF 34, P-CSCF 34 is judged to be in a faulty status. Following the decision of P-CSCF 34 being in a faulty status, S/I-CSCF 33 ends the sessions using the failed transport connection with P-CSCF 34 by sending a BYE request message. The BYE message is sent to the nodes located along the signalling path in the opposite direction with respect to the adjacent node judged to be faulty, and namely, in the scenario represented in the figure, to S/I-CSCF 32, which forwards the message to P-CSCF 31, which forwards the BYE message to UE 30a and UE 30n.

Polling messages may be standard SIP messages employed for inquiring the other party's capabilities and/or for sending/receiving information. In particular, as for standard SIP messages, the polling messages contain an identification of the communication session, an originating address and a destination address. Polling messages can be routed in the same way as the other SIP requests/responses.

According to a preferred embodiment, a SIP OPTION message is used as polling message. The SIP OPTION message is defined by document IETF (Internet Engineering Task Force) RFC 3261, pages 67-68, which is published on the Internet at http://www.ietf.org/rfc/rfc3261.txt (download date: Dec. 12, 2008), the message being generally used to query the other party for its capabilities.

According to another preferred embodiment, a SIP INFO message is used as polling message. The SIP INFO message is defined by document IETF RFC 2976, published on the Internet at http://www.ietf.org/rfc/rfc2976.txt (download date: Dec. 12, 2008) and is generally used to send optional application-layer information, generally related to the session.

It is noted that within the foregoing embodiments the polling message does not need to include the information on the timer (i.e., the heartbeat rate) of the inquiring node, as each node is configured to start a timer associated with a two-way transport link with an adjacent node when a message is received by that node. Therefore, the SIP messages used for polling can be standard messages as defined in the IETF.

It is remarked that the present invention in accordance with the above-described embodiments allows an efficient monitoring of the communication session with very low impact on the capacity and performance of the nodes. In fact, no additional traffic is generated during service operation of the nodes since normal message exchange during the session is used for monitoring. In addition, a polling process is activated only upon detection of an anomaly in the operation of a node handling the session and only by the adjacent nodes that have detected the anomaly, *i.e.* no message has been received from the "anomalous" node within a predefined time interval equal to the heartbeat rate. In this way, the heartbeat rate can be set to a relatively low value, e.g., 30 seconds or even lower, thereby avoiding or minimising any overcharging.

Preferably, each SIP node of the session-control layer stores the status information of the adjacent nodes with which it has an open connection and the timer associated with the respective adjacent node. In an embodiment, each SIP node comprises a storing module, which can be a software entity for carrying out computer executable instructions, configured to maintain a table for storing the current status of the adjacent nodes. The storing module is logically linked to the monitoring module provided in the node.

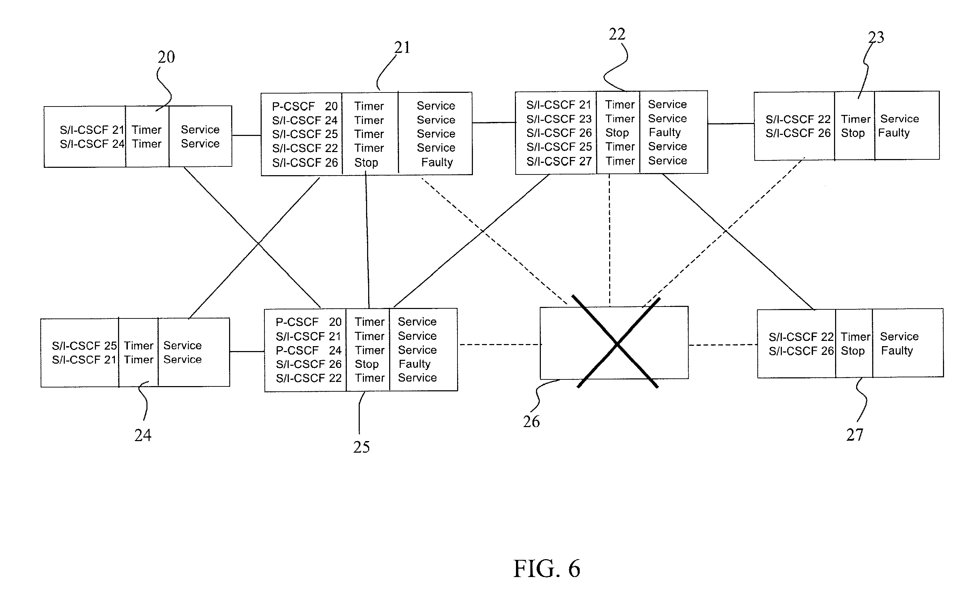

Figure 6 illustrates the scenario of the transmission process of Fig. 2 for which each node maintains a table for monitoring the activity of the adjacent nodes, according to an embodiment of the present invention. Same numbers are used to identify components having the same or similar functions as those described with reference to Fig. 2. The first column of the tables contains the entries with information identifying the adjacent node, for instance entries may comprise the IP address and/or the URI of the adjacent node. The second column of the table contains the entries with information on the timer set for the corresponding adjacent node. Although the timers can be set for each two-end signalling link overlaying the transport-layer connection and thus may be different for each or some of the hops of the message route, preferably, the timers of each node along the signalling path of a SIP session are set to have the same heartbeat rate, in order to simplify management of the communication system.

Finally, the third column of the tables contain the entries with information on the status of the adjacent nodes with the description "Service" or "Faulty". The status information can be a tag containing the description "Service" or "Faulty".

As an example, node S/I-CSCF 22 in the signalling layer is considered. Server 22 has five adjacent nodes with which a connection had been established, namely servers 21, 23, 25, 26 and 27. When node S/I-CSCF 26 is judged to be in a faulty status, node 22 stops the timer associated with node 26 (i.e., no reset of the timer will occur) and marks the status of server 26 as "Faulty". When node 26 is judged to be in a faulty status, node 22 sends a BYE request to the adjacent nodes that handle the affected sessions (i.e. those that were routed through the faulty node) so as to request a termination of the sessions/dialog states. The BYE requests are sent along a signalling path that is opposite to the signalling path in which a failure was detected. For example, node 22 may handle sessions originated through node 23 and terminated via node 26 or may handle sessions originated through node 26 and terminated via node 23. Node 22 may then send a BYE request to nodes 23, for all the sessions affected by the failed node.

In order to prevent the possible creation of a storm of BYE messages at the occurrence of a node failure, which may lead to a traffic congestion, according to an embodiment, transmittal of BYE messages is completed within a time window possibly configurable by the operator.

The node deciding that an adjacent node is in a faulty status may be configured to consider the faulty status as "reversible". In other words, when a certain condition is satisfied, the node may promote the adjacent node back to service status.

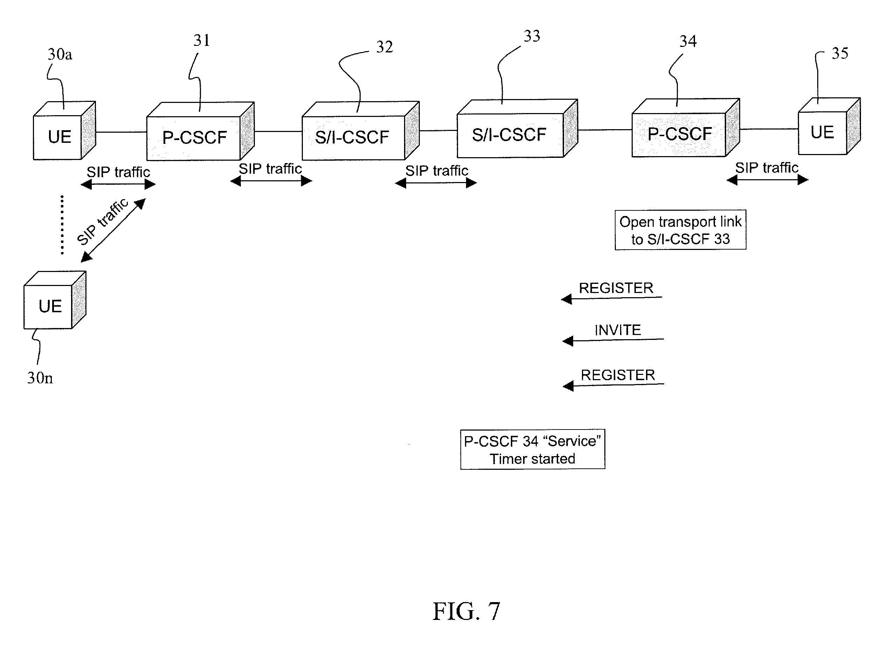

Figure 7 is a diagram representing a scenario involving the same entities of the scenario of Fig. 5 and showing a case of a failed node coming back to working order. Same numbers are used to identify components having the same or similar functions. In the illustrated scenario, node P-CSCF 34 receives SIP traffic from UE 35 and opens a transport-layer connection with S/I-CSCF 33. P-CSCF 34 sends a first message to S/I-CSCF 33, such as a REGISTER message. The node S/I-CSCF 33 can be configured to promote to service status node P-CSCF 34 after having received N messages, where N is configurable. In the example of Fig 7, P-CSCF 34 is reinstated to service condition by S/I-CSCF 33 after having received 3 messages (N=3). Receipt of the third message starts the timer associated with the adjacent node and monitoring procedure to check liveliness of adjacent nodes takes place as described previously with reference to Figs. 4 and 5.

The functionalities of the SIP nodes described herein may be implemented using a computer program product comprising computer executable instructions, i.e., software entities made of data and/or definition of actions that can be performed on data, embodied in a computer readable medium. Examples of computer readable media suitable for implementing the method and system described herein include chip memory devices, programmable logic devices, application-program interfaces, processing units, and dedicated circuitry for achieving functionalities. The functionalities of the invention can be implemented in a single device or can be distributed in a plurality of physical devices in a de-centralized fashion.

In the following, a method and system for detecting node failure according to further embodiments of the present invention will be described. In the embodiments, when a transport connection has been established between two adjacent SIP nodes, the node that has initiated the connection starts a polling process for monitoring the liveliness of the adjacent node.

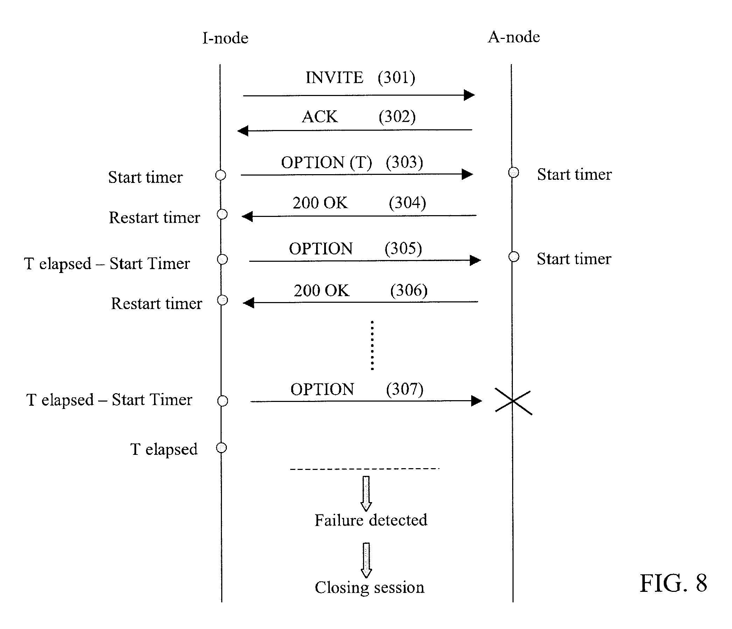

Figure 8 is a flow chart schematically depicting the signalling process for detecting node failure, according to an embodiment of the invention. Only to simplify the following description of the figure, the first SIP node that initiates the connection is referred to as the initiator node (I-node) and an adjacent SIP second node, which the signalling link overlaying the transport-layer connection is established with, is referred to as the adjacent node (A-node). For example, by referring to the scenario illustrated in Fig. 2, the I-node of Fig. 8 can be S/I-CSCF 21 and the A-node can be any of the adjacent nodes 20, 22, 24, 25 or 26. In general, either of the I-node or A-node can be an S-CSCF, an I-CSCF or a P-CSCF.

After transmission of a SIP message initiating a session from an I-node to an A-node, typically an INVITE message (step 301), and the reception of an acknowledgement message, ACK, to the INVITE from the A-node (step 302), a persistent transport-layer connection is opened between the I-node and the A-node. When the transport connection is established, the I-node sends a first polling message to the A-node (step 303) and, upon transmission of the polling message, starts a timer that is associated with the A-node, namely with the signalling link connecting the two nodes. In an embodiment, step 303 takes place immediately after having received the acknowledgement message to the INVITE, *i.e.* immediately after step 302.

The timer is set with a heartbeat rate T. As it will explained more in detail in the following, the heartbeat rate, T, is the time interval, which is measured by the timer in the I-node, and preferably also in the A-node, by which a polling message or an acknowledgement of a polling message, e.g., a 200 OK, should be received.

The first polling message (step 303) carries the information on the heartbeat rate set by the timer in the I-node in order to indicate to the A-node that transmission of that message has started a heartbeat process with heartbeat rate T. The first polling message and in general polling messages have a syntax and semantic compliant to SIP and comprise a header and, preferably, a body. According to an embodiment, the information on the heartbeat rate is included in the semantic of the message body. The semantic description of the heartbeat rate information may comprise any commonly agreed symbols for description of values, ranges, attributes, and parameters of event information. It may also comprise a description such as a textual description, a list of keywords and so on. For instance, semantics of a SIP message may describe an instruction to the adjacent node, e.g., "This packet providers heartbeat information with heartbeat rate T".

According to an embodiment, a SIP OPTION message is used as polling message. In particular, when used as first polling message to initiate the polling process, a modified SIP OPTION message is employed, namely an OPTION message defined by document RFC 3261 is modified in order to include information indicative of the heartbeat rate. This embodiment is illustrated in Fig. 8, in which the first polling message (step 303) is an OPTION containing the information on the heartbeat rate T and the following polling messages (e.g., steps 305 and 307, described in the following) can be OPTION messages defined by IETF.

According to another preferred embodiment, a modified SIP INFO message is used as polling message. In particular, when used as first polling message to initiate the polling process, a modified SIP INFO message is employed, namely a SIP INFO defined by document RFC 2976 is modified in order to include the heartbeat rate information.

Other suitable SIP messages can be used within the scope of the present embodiment of the invention, as long as they can be configured to include the information on the heartbeat rate.

Upon receipt of the first polling message, the A-node extracts the heartbeat information from the polling message and starts a timer having heartbeat rate equal to T and acknowledges initiation of the heartbeat process by sending an acknowledgement message, such as a 200 OK (step 304).

In an embodiment, receipt of the first polling message can start a negotiation procedure involving both the I-node and the A-node on determining an agreed heartbeat rate. For instance, the heartbeat rate T proposed by the I-node (i.e., contained in the first heartbeat message) can be unacceptable for the A-node, for instance it can be too short for allowing a correct managing of the heartbeat process. In that case, the A-node sends an acknowledgment response including a new heartbeat rate T'>T (e.g., T'=90 sec and T=60 sec). For example, a 200 OK message is provided with a header and a body, the body including the new heartbeat rate T'. At the end of the negotiation procedure, an agreed heartbeat rate, Tₐ, which is equal for both the I-node and the A-node is decided. In that case, the first timer in the I-node and the second timer in the A-node are set with heartbeat rate Tₐ.

Upon receipt of the acknowledgement message within the heartbeat rate set upon transmission of the first polling message, the I-node resets the timer to zero and starts the timer of heartbeat rate T (Tₐ), namely the I-node restarts the timer. After expiry of the timer, the I-node sends a second polling message, e.g., a SIP OPTION, and starts again the timer (step 305). Preferably, the timer is started upon transmission of the second polling message.

Preferably, polling messages subsequent to the first message that initiates the polling process and within the same session do not include the heartbeat rate information since once the heartbeat rate is communicated or agreed between the two nodes, it is not necessary within the same communication session to retransmit that information to the A-node.

Upon receipt of the second polling message (sent at step 305), the A-node restarts the timer and responds with an acknowledgement message, e.g., a 200 OK (step 306). Preferably, transmittal of the acknowledgement message takes place immediately after (re)start of the timer.

The sequence of steps 305 and 306 can be re-iterated and a polling message is sent by the I-node to the A-node when the timer associated with the A-node has expired. In particular, in case the A-node is on service during the whole SIP session established between the two nodes, the sequence of steps 305 and 306 can be repeated a number of times, the number depending on the heartbeat rate T and on the duration of the session. In other words, receipt of an acknowledgment message to a polling message within the heartbeat rate identifies in the I-node the responsive action of restarting the timer and sending another polling message.

If the A-node does not communicate with the I-node within the heartbeat rate set by the timer, and in particular an acknowledgment message is not received from the A-node within the heartbeat rate T, the I-node takes one or more actions aimed at the decision of whether the A-node is in a faulty status. For instance, after having sent an OPTION at step 307, the timer has expired without receipt of a response from the A-node. The failure can occur at the session-control layer, for instance caused by an internal failure of the node (software and/or hardware), and/or at the transport layer.

The decision on whether the A-node is in a faulty status, which corresponds to the detection of the A-node failure and which determines an action to be taken by the I-node as explained in the following, can be based on different approaches.

In an embodiment, faulty status of the A-node is decided by the I-node if a time equal to the heartbeat rate T has elapsed and no response has been received from the A-node. This implies that the A-node is judged to be in a faulty status when a time larger than the heartbeat rate T has elapsed from the last response received from the A-node.

In another embodiment, the I-node decides that the A-node is in a faulty status when the following actions (i) to (iii) have taken place:
(i) the A-node has not sent an acknowledgement message before the timer expires;
(ii) after step (i), i.e., the heartbeat rate T has elapsed, the I-node retransmits an inquiry polling message a number of times N (N > 1) at a time interval, X, and
(iii) the I-node receives no response from the A-node to the N^{th} inquiry polling message.

At the occurrence of step (iii), the A-node is judged to be in a faulty status. To implement this embodiment for the failure status decision, the I-node can be provided with a second timer set with a time interval X and activated in case of no receipt of a response from the A-node, as in action (i). The number N and the time interval X can be configurable by the operator. For instance, the time interval X can be equal to the heartbeat rate or being smaller than the heartbeat rate. In case X=T, the I-node can be advantageously provided with only one timer associated with a respective adjacent node.

In still another embodiment, expiry of the timer without receipt of the response from the A-node, triggers a guard timer in the I-node with time interval T_{f}, which allows the I-node to wait for an additional time T_{f} (after expiration of the heartbeat rate T) before the I-node decides that the A-node is in the faulty status. The time interval T_{f} can be configured by the operator.

The decision that the A-node is in a faulty status determines the action in the I-node of closing the sessions that include/involve the A-node in their signalling path. According to a preferred embodiment, upon detection of failure of the A-node, the I-node sends a BYE request along a signalling path in the opposite direction from where the failure was detected, e.g., if the downstream node is faulty, the BYE request is transmitted to the upstream node, so as to terminate the ongoing sessions affected by the failed node. In addition, if necessary, the I-node closes the transport connection with the faulty node.

According to SIP standard, a SIP node maintains the information on session identification, which is generally contained in a SIP message, such as in a BYE request, in order to enable the node to route the message along the correct signalling path for a given session. This enables the nodes to identify the session to be closed down when they receive a BYE request.

Since the A-node has set a timer with the same heartbeat rate as that of the I-node (as proposed by the I-node or as agreed with the I-node after negotiation procedure), according to an embodiment, if the A-node does not receive a polling message within the heartbeat rate, the A-node decides whether the I-node is in a faulty status or not, which corresponds to the detection of the I-node failure and which determines an action to be taken by the A-node, can be based on different approaches (case not shown in Fig. 8).

In an embodiment, the faulty status of the I-node is decided if a time equal to the heartbeat rate T has elapsed and no polling message has been received by the A-node.

In another embodiment, expiry of the timer without receipt of the polling message from the I-node, triggers a guard timer in the A-node with time interval T_{f}, which allows the A-node to wait for an additional time T_{f} (after expiration of the heartbeat rate T) before the A-node decides that the I-node is in the faulty status. The time interval T_{f} can be configured by the operator.

Analogously to what described above with reference to the failure of the A-node, the decision that the I-node is in a faulty status determines the action in the A-node of closing the sessions that have the I-node in their signalling path. In particular, the A-node sends a BYE request along a signalling path in the opposite direction from where the failure was detected.

Therefore, according to a preferred embodiment, the process allows monitoring of the liveliness of both adjacent nodes, although the role of each node played in the process depends on the node that initiates the heartbeat process.

Preferably, the initiator node comprises a monitoring module, which can be a software entity for carrying out computer executable instructions and which is configured to start a timer associated with the adjacent node once the connection with that node is established and to send polling messages at the heartbeat rate of the timer. In an embodiment, the initiator node comprises a storing module, which can be a software entity for carrying out computer executable instructions and logically linked to the monitoring module, the storing module being configured to maintain a list containing the identification of the adjacent node, the timer and the status information on the adjacent node. A missing receipt of an acknowledgement message to a polling message, within the heartbeat rate T or within a time interval longer than T and configurable by the operator, causes the initiator node to mark in the list the status of the adjacent node as "Faulty".

Preferably, the adjacent node comprises a monitoring module configured to extract and store the timer of heartbeat rate T received and/or agreed with the initiator node. The timer is associated with the initiator node. In an embodiment, the adjacent node comprises a storing module, logically linked to the monitoring module, for maintaining a list containing the identification of the initiator node, the timer and the status information on the initiator node. A missing receipt of a polling message, within the heartbeat rate T or within a time interval longer than T and configurable by the operator, causes the adjacent node to mark in the list the status of the initiator node as "Faulty".

Figure 8 has considered the heartbeat process for the exchange of signalling messages between two SIP nodes. In general, as described above, during a SIP session, a node can communicate, namely can open a transport-layer connection, with more than one adjacent node, as exemplified in Fig. 2. In an embodiment of the present invention, each SIP node in the session-control layer, e.g., the IMS, is arranged to maintain a list of the adjacent nodes with which it has initiated the communication, a timer associated with each adjacent node and an associated status information on their service condition, e.g., (on) service or faulty. In particular, the status information and the timer are associated with an identification of the adjacent node, for instance its IP address and/or its URI.

As described above, after an initiator node has opened a transport-layer connection with an adjacent node, a polling process starts by sending a first polling message proposing a heartbeat rate T to the adjacent node. The timer set with heartbeat rate T associated with the adjacent node is stored in the initiator node. Once, the adjacent node has received the first polling message initiating the polling process, the heartbeat rate T is extracted from the received message and is stored in the node.

In an embodiment, each node can maintain a list for monitoring activity of the adjacent nodes, which can be represented by tables similar to those illustrated in correspondence of each node in the scenario of Fig. 6. Preferably, each node comprises a storing module configured to maintain a table based on the information received from an adjacent node with which a transport-layer connection has been opened. The table comprises an entry with information identifying the adjacent node, for instance entries may comprise the IP address and/or the URI of the adjacent node; an entry with information on the timer set for the corresponding adjacent node; and an entry with information of the status of the adjacent nodes with the description "Service" or "Faulty". The status information can be a tag containing the description "Service" or "Faulty".

Preferably, each SIP node comprises a monitoring module for determining a status for the adjacent nodes in the signalling layer indicating if the nodes are on service or they are in a faulty state. The monitoring module is configured to perform the following operations:
setting a first timer associated to a first adjacent node and starting the first timer upon transmission of a first polling message containing information indicative of the first timer, when a connection has been requested and established with said adjacent first node, and
extracting a second timer when a polling message containing information indicative of the second timer has been received from a second adjacent node and starting the second timer associated to the second adjacent node upon transmission of an acknowledgement message to the received polling message.

According to the described embodiments, all sessions/dialog states associated with the faulty node are cleared and charging can be stopped, upon detection of a node failure. Since polling messages and responses are exchanged within the normal signalling taking place during the session, the heartbeat rate T can be set at a relatively low value, e.g., between 30 and 90 seconds, without affecting the overload of the nodes.

It is to be noted that the monitoring mechanism according to the present embodiments is based on transmission of polling messages from one node to the adjacent nodes with which it has an open session, rather than on transmission of session refresh messages. In case of monitoring based on session refresh messages, each UE that has one or more open sessions with the network sends refresh session messages at a rate of the session timer for every open session, thereby affecting the whole session and hence impacting heavily on the transaction capacity of all nodes in the signalling path of the session. On the contrary, since SIP nodes, such as CSCF functions within the IMS/SIP architecture, typically have a high transaction capability, e.g., up to 500 transactions per seconds, exchange of polling messages between adjacent nodes as described in the method for detecting node failure according to the present embodiments are not expected to significantly impact on the node capacity.

According to an aspect, the present invention is directed to a method of detecting a node failure in a signalling path for routing application-layer messages in a session-control layer using session initiation protocol (SIP), the path being for use in a communication session between at least two endpoints, the method comprising the steps of:
(a) establishing a signalling path a portion of which overlaying a transport-layer connection between a first SIP node to a second SIP node adjacent to the first node, the transport-layer connection being initiated by the first node;
(b) starting a first timer in the first node, the first timer being associated with the second node, and sending a first polling message towards the second node, the first polling message comprising an information indicative of the first timer;
(c) in the first node, determining the current status of the second node indicative of the service or faulty condition by:
   deciding on a service status when an acknowledgement message to the first polling message is received from the second node before expiry of the first timer, and
   deciding on a faulty status when no acknowledgement message has been received from the second node and the first timer has expired, and
(d) identifying a responsive action by:
   restarting the first timer and sending a second polling message when the current status of the second node is decided to be a service status, and
   closing the communications session when the current status of the second node is decided to be a faulty status.

Preferably, in step (d), restart of the first timer takes place upon receipt of the acknowledgement message.

In an embodiment, the first timer is set for a first heartbeat rate and the information is indicative of the first heartbeat rate, the method further comprising, after step (b), the steps of: extracting in the second node the information indicative of the first timer and starting a second timer for a second heartbeat rate upon receipt of the first polling message, and sending the acknowledgement message after start of the second timer, wherein the first heartbeat rate is equal to the second heartbeat rate.

In another embodiment, the timer is set for a first heartbeat rate and the information is indicative of the first heartbeat rate, the method further comprising, after step (b), the steps of:
extracting in the second node the information indicative of the first timer and starting a second timer for a second heartbeat rate;
negotiating an agreed heartbeat rate between the first and second node so as to determine a heartbeat rate common to the first node and the second node, and
sending the acknowledgement message after start of the second timer.

Preferably, the decision in the first node of a faulty status of the second node is triggered by the following condition:
after transmittal of N inquiry polling messages, with N≥1, transmitted at a time interval equal to the first heartbeat rate (or the agreed heartbeat rate), the first node receives no acknowledgement message from the second node to the N^{th} inquiry polling message within the first heartbeat rate.

Preferably, the method further includes, after step (b) the steps of:
in the second node, determining the current status of the first node indicative of the service or faulty condition by:
   deciding on a service status when a polling message is received from the first node before expiry of the second timer;
   deciding on a faulty status when no polling message is received from the first node and the second timer has expired, and
   identifying a responsive action by:
   restarting the second timer and sending an acknowledgment message to the received polling message when the status of the first node is decided to be a service status, and
   closing the communication session when the status of the first node is decided to be a faulty status.

Preferably, restart of the second timer takes place upon receipt of a polling message from the first node.

Preferably, the step of sending an acknowledgement message to a polling message takes place immediately after the start (in case of receipt of the first polling message) or restart (in case of receipt of the successive polling messages) of the second timer.

Preferably, after step (b), the method comprises the step of maintaining in the first node a list including an identification of the second node associated with the first timer and a status information on the current status of the second node.

Preferably, after the step of starting a second timer in the second node, the method comprises the step of maintaining, in the second node, a list including an identification of the first node associated with the second timer and a status information on the current status of the first node.

Preferably, the polling messages are SIP OPTION messages or SIP INFO messages.

According to another aspect, the present invention relates to a computer program product comprising computer-executable instructions embodied in a computer-readable medium for performing the above-described method.

According to a further aspect, the present invention relates to a communication system of detecting a SIP node failure in a signalling path for routing application-layer messages in a session-control layer using session initiation protocol (SIP), the path being for use in a communication session between at least two endpoints:
a first SIP node being adapted to request a transport-layer connection with a second SIP node adjacent to the first node, the first node comprising a first monitoring module for determining the current status of a second node, the first monitoring module being configured to perform the following operations:
   starting a first timer associated with the second node and sending a first polling message containing information indicative of the first timer towards the second node, when a connection has been requested and established with the second node;
   determining the current status of the second node indicative of the service or faulty condition by:
      deciding on a service status when an acknowledgement message to the first polling message is received from the second node before expiry of the first timer, and
      deciding on a faulty status when no acknowledgement message has been received from the second node and the first timer has expired, and
      identifying a responsive action in the first node comprising:
         restarting the first timer and sending a second polling message when the current status of the second node is decided to be a service status, and
         closing the communications session when the current status of the second node is decided to be a faulty status.

Preferably, the adjacent node comprises a second monitoring module configured to perform the following operations: extracting the information indicative of the first timer when the first polling message has been received and starting a second timer associated with the second node upon receipt of the first polling message.

Preferably, the second monitoring module in the second node is configured to further perform the following actions:
determining the current status of the first node indicative of the service or faulty condition by:
   deciding on a service status by restarting the second timer and sending an acknowledgement message when a polling message is received from the first node before expiry of the second timer;
   deciding on a faulty status when no polling message has been received from the second node and the second timer has expired, and
   closing the communications session when the decision of the first node being in a faulty status is in the affirmative.

It will be appreciated by the person skilled in the art that various modifications may be made to the above described embodiments without departing from the scope of the present invention. For example, although the above preferred embodiments are described with reference to an IMS/SIP network environment, the invention may be applied to SIP-based session-control layer operating between an access network and a service application layer.

Whilst the preferred embodiments have been described with reference to a communication network employing a connection-oriented transport protocol, such as TCP and SCTP, because it may ease mapping of sessions of adjacent nodes, the present invention can be applied also in communication networks using an unreliable transport protocol, such as UDP.

## Claims

1. A method of detecting a node failure in a signalling path for routing application-layer messages in a session-control layer using session initiation protocol (SIP), the path being for use in a communication session between at least two endpoints, the method comprising the steps of:
(a) establishing a signalling path, a portion of which overlaying a transport layer connection from a first SIP node to a second SIP node;
(b) in the first node starting a first timer for a heartbeat rate, the first timer being associated with the second node;
(c) determining the current status of the second node indicative of the service or faulty condition by:
deciding on a service status by restarting the first timer when a message is received from the second node within the heartbeat rate, and
starting a polling process to decide on whether the second node is in a faulty status when no message has been received from the second node and the heartbeat rate has elapsed, and
closing the communications session when the status of the second node is decided to be a faulty status.

2. The method of claim 1, wherein the polling process comprises the steps of:
sending at least one polling message towards the second node at a first polling rate;
when an acknowledgement message is received from the second node within the first polling rate, deciding on a service status of the second node by restarting the first timer, and
when no message is received from the second node within a time interval equal to at least the first polling rate, deciding on a faulty status of the second node.

3. The method of claim 2, wherein the first polling rate is equal to the heartbeat rate.

4. The method of anyone of claims 1 to 3, further comprising, after the step (a) of establishing a signalling path, the steps of:
in the second node starting a second timer for the heartbeat rate, the second timer being associated with the first node;
determining the current status of the first node indicative of the service or faulty condition by:
deciding on a service status by restarting the second timer when a message is received from the first node within the heartbeat rate, and
starting a polling process to decide on whether the first node is in a faulty status when no message has been received from the second node and the heartbeat rate has elapsed, and
closing the communications session when the status of the first node is decided to be a faulty status.

5. The method of claim 4, wherein the polling process initiated in the second node comprises the steps of:
sending at least one polling message towards the first node at a second polling rate;
when an acknowledgement message in response to the at least one polling message is received from the first node within the second polling rate, deciding on a service status of the first node by restarting the second timer, and
when no acknowledgement message is received from the first node within a time interval equal to at least the second polling rate, deciding on a faulty status of the first node.

6. The method of claim 5, wherein the second polling rate is equal to the heartbeat rate.

7. The method of anyone of claims 2, 3 or 4, when dependent on claims 2 or 3, wherein the decision in the first node of a faulty status of the second node is triggered by the following condition:
after transmission of N polling messages, with N≥1, transmitted at a time interval equal to the first polling rate, the first node receives no acknowledgement message from the second node to the N^{th} polling message within the first polling rate.

8. The method of claims 5 or 6, wherein the decision in the second node of a faulty status of the first node is triggered by the following condition:
after transmission of N polling messages, with N≥1, transmitted at a time interval equal to the second polling rate, the second node receives no acknowledgement message from the first node to the N^{th} polling message within the second polling rate.

9. The method of anyone of the preceding claims, wherein the step of closing the communication session comprises the step of sending a BYE message along the signalling path in the opposite direction to the failed second node.

10. The method of anyone of anyone of claims 4 to 6, wherein the step of closing the communication session comprises the step of sending a BYE message along the signalling path in the opposite direction to the failed first node.

11. The method of any of the preceding claims, wherein the at least one polling message is selected from the group consisting of SIP OPTION message and SIP INFO message.

12. A communication system for detecting a node failure in a signalling path for routing application-layer messages in a session-control layer using session initiation protocol (SIP), the messages being handled by a plurality of SIP nodes and the path being for use in a communication session between at least two endpoints, the system comprising:
a first node of said plurality of SIP nodes comprising a first monitoring module for determining the current status of a second node of said plurality of SIP nodes, the second node being adjacent to the first node and having an open transport-layer connection with the first node, the first monitoring module being configured to perform the following operations:
(a) starting a first timer for a heartbeat rate, the first timer being associated with the second node;
(b) determining the current status of the second node indicative of the service or faulty condition by:
deciding on a service status by restarting the first timer when a message is received from the second node within the heartbeat rate, and
starting a polling process to decide on whether the second node is in a faulty status when no message has been received from the second node and the heartbeat rate has elapsed,
wherein the first monitoring module is configured to trigger the closing of the communication session when the status of the second node is decided to be a faulty status.

13. The communication system of claim 12, wherein the second node comprises a second monitoring module for determining a status of a first node and being configured to perform the following operations:
(a) starting a second timer for the heartbeat rate, the second timer being associated with the first node;
(b) determining the current status of the first node indicative of the service or faulty condition by:
deciding on a service status by restarting the second timer when a message is received from the first node within the heartbeat rate, and
starting a polling process to decide on whether the first node is in a faulty status when no message has been received from the first node and the heartbeat rate has elapsed,
wherein the second monitoring module is configured to trigger the closing of the communication session when the status of the first node is decided to be a faulty status.

14. The communication system of claim 13, wherein each of the first and the second node further comprises a storing module configured to maintain a table based on the information received on the current status of the respective adjacent node, the table including:
an entry with information indicative of the timer associated with the respective adjacent node, an entry with information identifying the respective adjacent node and an entry with information on the status of the respective adjacent node.

15. The communication system of any of claims from 12 to 14, wherein each node of the plurality of SIP nodes has at least one adjacent node in said plurality along the signalling path and comprises a monitoring module configured to perform the following operations:
(a) starting a timer for a heartbeat rate, the timer being associated with the at least one adjacent node;
(b) determining the current status of the at least one adjacent node indicative of the service or faulty condition by:
deciding on a service status by restarting the timer when a message is received from the at least one adjacent node within the heartbeat rate, and
starting a polling process to decide on whether the at least one adjacent node is in a faulty status when no message has been received from the at least one adjacent node and the heartbeat rate has elapsed,
wherein the monitoring module is configured to trigger the closing of the communication session when the status of the at least one adjacent node is decided to be a faulty status.

16. The communication system of any of claims from 12 to 15, wherein the session-control layer is an IP multimedia subsystem (IMS).

17. A computer program product comprising computer-executable instructions embodied in a computer-readable medium for performing the method of anyone of claims 1 to 11.
